# EUROPEAN PATENT SPECIFICATION

(11) **EP 4 475 791 B1**
(45) Date of publication and mention of the grant of the patent: **18.03.2026**
(21) Application number: 23706668.3
(22) Date of filing: 10.02.2023
(51) Int. Cl.: A61C 7/20

(54) **ORTHODONTIC ARCHWIRE**
ORTHODONTISCHER BOGENDRAHT
FIL ORTHODONTIQUE

(30) Priority: 11.02.2022 GB 202201780
(43) Date of publication of application: 18.12.2024
(73) Proprietor: Line + Line Limited, Cobham, Surrey KT11 3EB (GB)
(72) Inventor: DONALDSON, Christopher, London WC2A 2JR (GB); DONALDSON, David, East Horsley Surrey KT24 6RL (GB)
(74) Representative: Stevens Hewlett & Perkins
(86) International application number: PCT/GB2023/050308
(87) International publication number: WO 2023/152506

(56) References cited:
- US-A- 4 850 865
- US-A- 4 897 036
- US-A- 5 468 147
- US-B2- 7 186 115
- US-B2- 7 354 267

## Description

This invention relates to an archwire for use in orthodontic devices.

It is to be noted that to convert dimensions given in inches into SI units, 1 inch is equal to 25.4 mm. The origins of the orthodontic archwire were in Dr P. Fauchard's

Bandeau, from 1746, which used a curved ribbon arch made of gold or silver wrapped around the buccal (outside surfaces) of the maxillary (upper) or mandibular (lower) dental arches. The Bandeau was perforated with holes through which gold thread was threaded in order to apply traction to teeth when tension was applied, which tipped tooth crowns towards the metal ribbon arch. Subsequently, the metal ribbon, was developed into metal arch-shaped wires which were round and rectangular in cross section, by Dr E. Angle, which aligned the crowns of teeth and torqued the roots respectively. The orthodontist spent a great deal of time bending wires with Dr Angle's appliances.

Dr Andrews made a significant development by programming the three-dimensional control of each bracket/tube (and therefore each tooth) into the dimensions of the bracket and slot design. This obviated the need for most wire bends as each bracket/tube now had a built-in geometric 'prescription' when the archwire was inserted bringing each tooth to its ideal position (based on an average of 120 'ideal' occlusions subjectively assessed by Dr Andrews). The most popular contemporary fixed appliances in the United Kingdom are still based on a modification of Andrews Straight-wire appliance, both bracket and wire.

Subsequent bracket designs have focused on the modification of the bracket slot prescription and on alternative ligation methods. Design modifications tend to be made according to the respective innovator's philosophy of ideal tooth positioning, occlusion and treatment mechanics. Arguably the most significant set of design modifications introduced was by Dr R. McLaughlin, Dr J. Bennett & Dr H. Trevisi (MBT), which sought to overcome the principle mechanical issues that orthodontists had been experiencing with the original Andrews straight-wire appliance, including issues with torque delivery.

In order to orthodontically control the teeth, brackets are bonded to incisors, canines and premolars. Molar tubes are bonded or banded to molar teeth.

The two main types of bracket design currently available are conventionally ligated and self-ligated. In conventially ligated brackets a small elastic band (elastomeric) is used to secure the archwire into the bracket slot. 'Self-ligating' brackets have a gate mechanism which when closed secures the archwire. Self-ligating brackets can be subdivided into active, which have gate mechanisms that push the wire into the base of the bracket slot or passive, which do not.

The Andrews straight wire appliance originally used wires made of stainless steel throughout treatment but the introduction of nickel titanium archwires meant that contact point alignment and torque application became simpler and required fewer archwire bends due to the shape memory and superelastic properties of nickel titanium. A number of archwire forms are available, however the cross sections of wire available are limited to either round, square, rectangular or braided. In the United Kingdom, the bracket slot dimensions the wire engages into are typically 0.022 (height) x 0.028" (depth). In the United States (US) the dimensions of the bracket slot normally used are 0.018" x 0.028".

Modern treatment typically commences with the use of a light, flexible, round in cross section, nickel titanium (NiTi) archwires, which have shape memory and superelastic properties to align the dental contact points. The initial wire typically used has a round cross section with a 0.012" or 0.014" diameter. The cross sectional diameter is progressively increased, increasing tooth control. After the round wire phase of treatment, rectangular nickel titanium arch wires are used which deliver torque. Typically the final archwire used is a 0.019" x 0.025" stainless steel (SS) wire (0.017" x 0.025" in the US) on which final torque delivery, space closure, arch levelling, arch co-ordination and correction of the centrelines, overjet & overbite occurs.

An example typical archwire sequence is shown in the table below.

**Table 1:**

| WIRE DIMENSIONS | WIRE MATERIAL | MECHANICS | APPOINTMENT INTERVAL |
|---|---|---|---|
| +/- 0.012" | NiTi | Initial contact point alignment for arches with very displaced teeth | 6-8 weeks |
| 0.014" | NiTi | Initial contact point alignment | 6-8 weeks |
| 0.018" | NiTi | Continued contact point alignment | 6-8 weeks |
| 0.017 X 0.025" | NiTi | Initial torque delivery | 6-8 weeks |
| 0.019 X 0.025" | NiTi | Continued torque delivery | 6-8 weeks |
| 0.019 X 0.025" | SS | Final torque delivery | 6-8 weeks |
| | | Space closure, arch levelling, overjet correction, overbite correction, arch coordination & centreline correction | Varies |

There is a significant shortcoming in the typical design of modern orthodontic fixed appliances, which are based on Andrews Straight-wire appliance and as a result torque issues are still experienced clinically. This means the prescribed inclination of a tooth, relative to other teeth, is not achieved and this has potential aesthetic, functional and stability consequences if not corrected. Typically, incorrect inclinations are corrected at the end of treatment by the orthodontist using torquing archwire bends; this lengthens treatment time, needs significant operator skill to deliver and is often imprecise.

The main reason for the shortcoming in torque delivery is due to a significant physical gap between the wire and bracket slot. This physical gap is due to i) bracket manufacturers setting manufacturing tolerances so that on average bracket slots are oversized, so that wires are unlikely not to fit chairside, and ii) the difference in the dimensions of the wire and bracket slot, for example 0.019 x 0.025" for the archwire versus 0.022 x 0.028" for the slot.

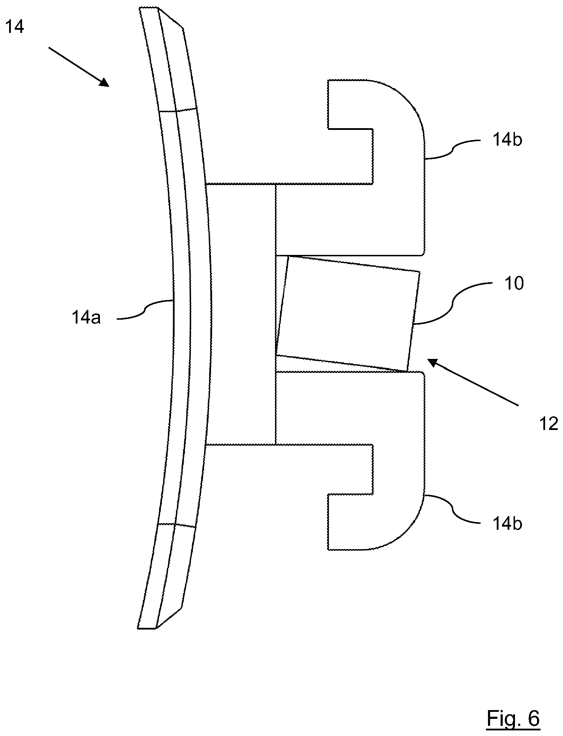

This torque issue is illustrated in Figure 6, which shows a side view of a 0.019 x 0.025" archwire in a 0.022 x 0.028" slot of a bracket. This is normally the final archwire used at the end of orthodontic treatment (the final row of table 1 above).

A number of non-wire bending techniques have so far been conceived in order overcome torque issues. Firstly, high or low torque brackets can be used. The clinician selects a high or low torque bracket version of the normal bracket torque prescription for teeth which at the start of treatment are notably displaced from the line of the arch. A number of manufacturers now produce these high / low torque brackets. However, this increases stock inventory and needs to be remembered by the orthodontist or orthodontic therapist at bond up of the appliance (or if the bracket needs to be replaced during treatment). Despite using high or low torque brackets the tooth inclination may still not be fully corrected.

Second, are active gate brackets. A bracket design with an active gate has been devised that pushes the rectangular (torque delivering) wire towards the base of the bracket slot however the wire gate is more expensive to produce, may become broken during treatment and is bulky, which can lead to chipping of the opposing dentition. In addition, when the active gate pushes larger wires into the bracket slot this increases friction when sliding, between the wire and the bracket slot.

Third, there are brackets with Computer Numeric Controlled (CNC) bracket slots. Traditionally brackets have been cast or injection moulded which have been shown to be oversized, however it is now possible to machine mill brackets using computer numeric controlled (CNC) milling, thus increasing precision of the bracket slot. However, this process is significantly more expensive than brackets produced through injection moulding and is not commonplace.

Fourth, it is possible to use a bracket with a rhomboid shaped slot. More recently, a bracket has been designed by Dr D. Damon in the US, that has a rhomboid slot in order to overcome the issue. However, this still means additional stock inventory is required, the operator must use the Damon appliance, slot prescription and system and the use of the rhomboid shaped slot bracket needs to be remembered by the orthodontist or orthodontic therapist at bond up of the appliance. Damon brackets are also expensive relative to the cost of other brackets.

Finally, the 0.021 x 0.025" rectangular stainless steel archwire can improve torque delivery. However, this archwire is not popularly used by orthodontists, perhaps because they feel the wire is too rigid. The finishing archwire for the 0.022 x 0.028" bracket slot in clinical practice is normally the 0.019 x 0.025" stainless steel wire. If the 0.021 x 0.025" archwire is used after the 0.019 x 0.025" archwire this increases treatment time.

Other prior art archwires are known from US 5468147, US 7186115, US 4897036 and US 7354267.

Despite the availability of these techniques, inadequately delivered torque is still commonplace and a simple, cost-effective solution is required.

It is therefore an object of the invention to improve upon the known art.

According to the present invention, there is provided an archwire according to claim 1.

Owing to the invention, it is possible to provide an archwire for use in an orthodontic device that substantially improves on the problems of existing archwires in delivering the necessary torque forces to the bracket(s) to which the archwire is connected. The archwire has been designed principally to be used with existing standard self-ligating type brackets or molar tubes without requiring any modification of those brackets or molar tubes. The archwire and the bracket or tube together comprise an orthodontic system. The primary advantages of the improved archwire are to simultaneously overcome inadequately delivered torque and to reduce overall treatment time by commencing torque delivery earlier in treatment. The secondary advantages of the improved archwire are to be cost efficient, easy to use and keep stock inventory to a minimum.

Preferably, the non-rectangular cross-section comprises a non-regular hexagon. The simplest and most efficient cross-section that can be used in the improved archwire is a non-regular hexagon. This provides the necessary improved torque functionality while being straightforward to manufacture and relatively easy for the orthodontist to handle. The six sides of the hexagon are formed from the two pairs of opposite edges (which are preferably at a right-angle to each other) and the two single connecting edges (which are preferably straight but could be curved).

Embodiments of the present invention will now be described, by way of example only, with reference to the accompanying drawings, in which figures 1 to 6 illustrate archwires of the prior art.
Figure 1 is a top plan view of an archwire,
Figure 2 is a cross-section of a bracket with an archwire,
Figure 3 is a perspective view of the bracket,
Figure 4 is a perspective view of three brackets with an archwire,
Figure 5 is a set of cross-sections through a bracket slot and archwires,
Figure 6 is a further cross-section of the bracket and an archwire,
Figure 7 is a pair of cross-sections of a bracket and an improved archwire according to the claimed invention,
Figure 8 is a perspective view of a bracket and archwire of Figure 7,
Figure 9 is a further perspective view of the improved archwire,
Figure 10 is a set of cross-sections through a bracket and improved archwires according to the claimed invention,
Figure 11 is a set of cross-sections of further embodiments of the improved archwire according to the claimed invention,
Figure 12 is a set of perspective views of the further embodiments of the improved archwire of Figure 11,
Figure 13 is a set of cross-sections of further embodiments of the improved archwire which does not form part of the claimed invention,
Figure 14 is a set of perspective views of the further embodiments of the improved archwire of Figure 13.

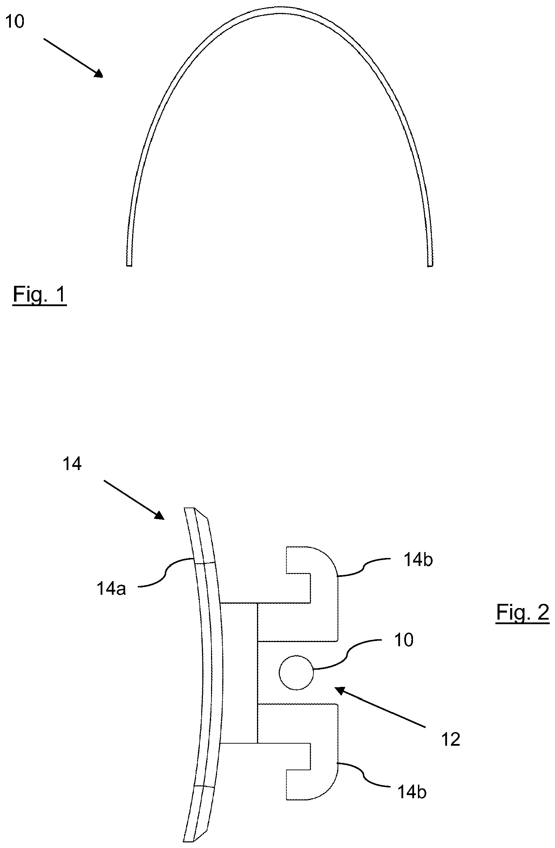

Figures 1 to 6 show the prior art arrangement of an archwire 10 that is located in a slot 12 of an orthodontic bracket 14. Figure 1 shows the archwire 10 from above and Figure 2 shows a cross sectional view of conventionally ligated bracket 14 with 0.012" round wire 10 inserted into the bracket slot 12. The bracket 14 has a bracket base 14a, which is adhered to a tooth surface (when in use) and is provided with bracket wings 14b that extend from the base 14a and form sides of the slot 12. The archwires 10 come in a number of different forms (selected largely depending on orthodontist's philosophy) but have approximately the shape shown in Figure 1.

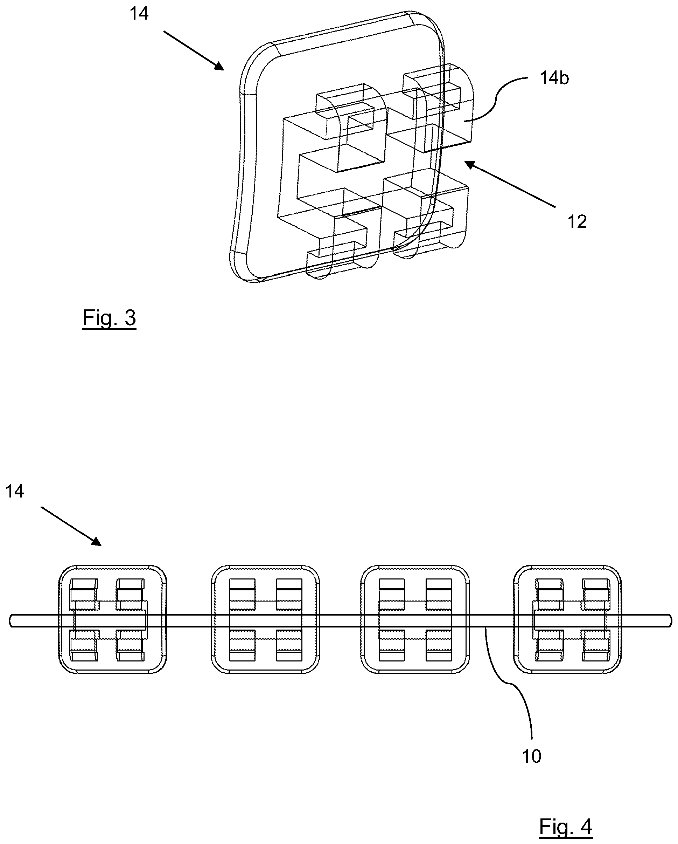

Figure 3 shows a perspective view of the bracket 14 with no archwire inserted into the slot 12. There are normally four tie wings 14b on a bracket 14 which can be seen in the Figure and around which a circular elastomeric tie is placed to secure the archwire 10 into the bracket slot 12. Alternatively, a narrow-gauge wire can be tied to secure the archwire 10 in place. Figure 4 shows a perspective view of a series of four conventionally ligated brackets in series after they have been aligned with 0.012" round archwire 10 inserted into the bracket slot 12. The archwire 10 would be tied into each bracket 14 around the tie-wings 14b using elastomeric or wire ligatures.

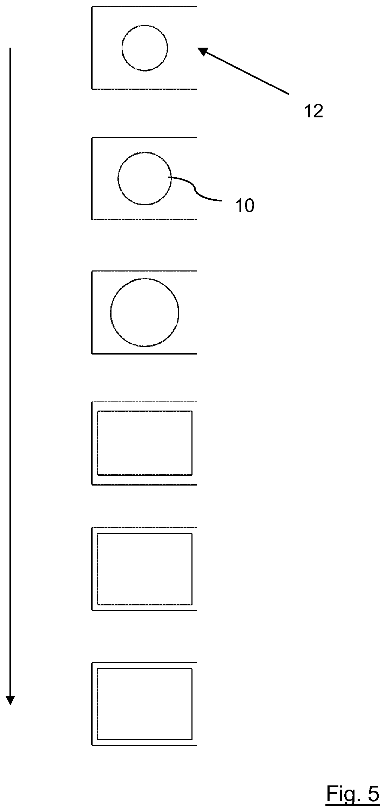

Figure 5 shows a conventional progression through the archwires 10 in cross section, (similar to that described above in table 1), which would normally be used over the course of a defined orthodontic treatment program. Nickel titanium (NiTi) wires are flexible, which helps engage the archwire 10 in the slot 12 and exhibit shape memory (they return to their original shape after deformation, within limits). NiTi wires also have superelastic properties (within a certain range) which means a range of wire deflections (when ligated into the brackets 14) will all lead to the same consistent force being delivered between appointments.

There are a number of ways that an orthodontist can secure a bracket or tube indirectly to a tooth. Stainless steel wires are relatively rigid and in stainless steel brackets 14 allow sliding of the brackets 14 along the archwire 10 with low friction. In conventional labial brackets 14 the (cheek facing) wall is open and the archwire 10 is inserted into the slot 12 in this direction. The archwire 10 is secured into place using a circular elastic tie around each bracket 14, which are changed at each wire change visit. In tubes (on molar teeth) this wall is closed and the archwire 10 has to be inserted into one end of the lumen of the tube. In self-ligating brackets 14, this wall is initially open and after the archwire 10 is inserted (as for conventional brackets 14) the gate is closed, creating a lumen within which the archwire 12 is located.

Figure 6 shows a cross-section through the bracket 14, with a rectangular cross-section archwire 10 located in the slot 12. The "slop" torque issue is illustrated which shows a side view of a 0.019 x 0.025" archwire in a 0.022 x 0.028" slot of a bracket (representing the dimensional differences between the bracket and the wire). This is the final archwire 10 used at the end of orthodontic treatment as shown in the program of Figure 5. The slop inherent in the system, which translates to poor torque control clinically, can be seen in the gaps between the bracket slot 12 and the archwire 10. The rectangular cross-section archwire 10 does not sit cleanly in the slot 12 of the bracket 14 and this causes an incomplete application of the forces required from the archwire 10 on the tooth to which the bracket 14 is connected. This is equally true for conventially ligated brackets, self-ligating brackets and molar tubes.

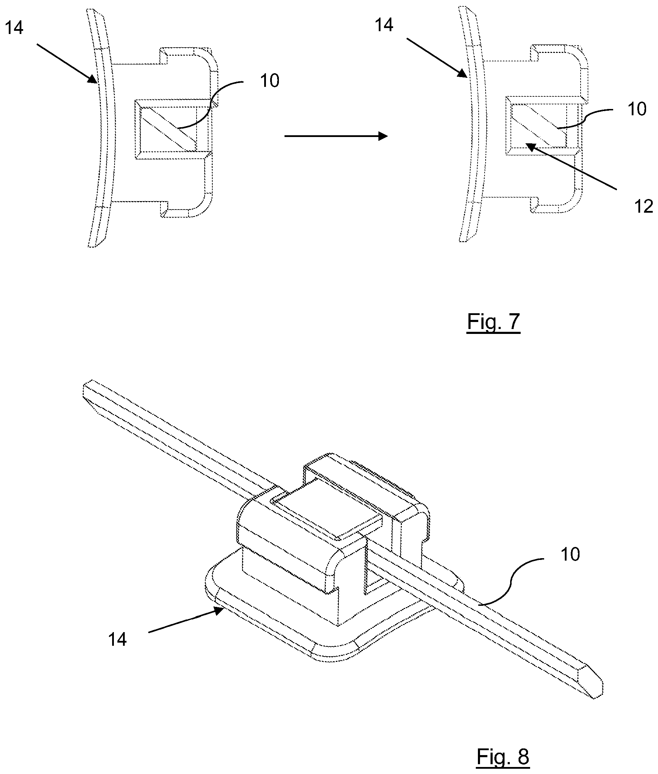

Figures 7 and 8 shows two embodiments of the present invention in use. The improved archwire 10 is located in a lumen 12 of an orthodontic bracket 14 and the archwire 10 has a non-rectangular cross-section 16. When active, the archwire 10 engages with opposite sides of the self-ligating orthodontic bracket lumen 12, and this is particularly the case whenever the archwire 10 is acting on purely rotation, tip or torque. The cross-section comprises two opposite pairs of substantially right-angled edges connected together by respective connecting edges. Figure 7 shows two different sizes of the archwire 10 that can be used in self-ligating brackets 14 or molar tubes The archwire 10 can have different thicknesses, but the corner-to-corner cross-section width of the archwire 10 closely matches the corner-to-corner distance of the lumen 12 of the bracket 14. Figure 8 shows one of these two archwires 10 in perspective form in a bracket 14.

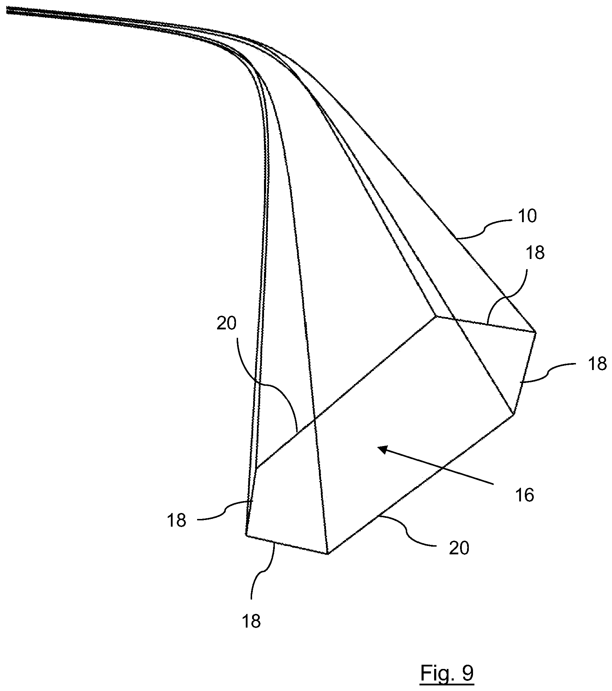

Figure 9 shows the archwire 10 on its own in perspective. This Figure shows the cross-section 16 of the archwire 10. The cross-section 16 of the archwire 10 is constant along the whole length of the archwire 10. The cross-section 16 comprises two opposite pairs of substantially right-angled edges 18 that are connected together by respective connecting edges 20. The archwire 10 can be designed so that the cross-section 16 of the archwire 10 varies along its length, with greater dimensions being used on teeth that require more force to move them.

The archwire 10 allows the use of a sequence of orthodontic archwires for use with fixed orthodontic appliances (braces) that uses preferably hexagonally shaped archwires (in cross-section) of any clinically appropriate material and archform and which can be used progressively and engage the lumen walls of a self-ligating bracket or molar tube lumen from the start or early on in treatment. Examples of this archwire design are shown in Figures 7 to 10. The brackets 14 to which the archwire 10 is in contact could be conventially ligated. The archwire design could also be used with lingual brackets (braces placed on the tongue facing surfaces of the teeth). The Figures show the use of the archwire 10 with buccal brackets (for braces placed on the cheek side of the teeth).

The primary aims of the improved archwire 10 are to simultaneously overcome inadequately delivered torque and to reduce overall treatment time, by commencing torque delivery earlier in treatment. The secondary aims of the improved archwire 10 are to be cost efficient, easy to use and keep stock inventory to a minimum.

The improved archwire 10 uses flexible shape memory or stainless steel wire (or any other clinically appropriate material and archform shape) that is preferably hexagonal in cross-section, and can be used as a sequence of wires, engaing opposite corners of the bracket 12 or molar tube lumen (whenever it is acting on purely rotation, tip or torque); which can be used in self-ligating brackets 14 or molar tubes. There are a number of significant benefits of this approach which are described below, apart from obviating the need for any alternative approach previously discussed with their incumbent disadvantages.

Using the non-rectangular (preferably hexagonal) cross sectional shaped archwire 10 from the start or near the start of treatment allows the archwire 10 to be flexible enough to be inserted into brackets 14 and tubes at or near the start of treatment. This allows torque to be applied earlier in treatment and therefore this would be expected to reduce treatment time.

Reducing the final wires' overall surface area is beneficial in the sliding mechanics phase of treatment as it reduces potential friction between the archwire 10 and the bracket lumen 12, whilst still maintaining good three-dimensional control of the tooth positions. The archwire 10 can be used inverted or uninverted which makes things simple for the operator.

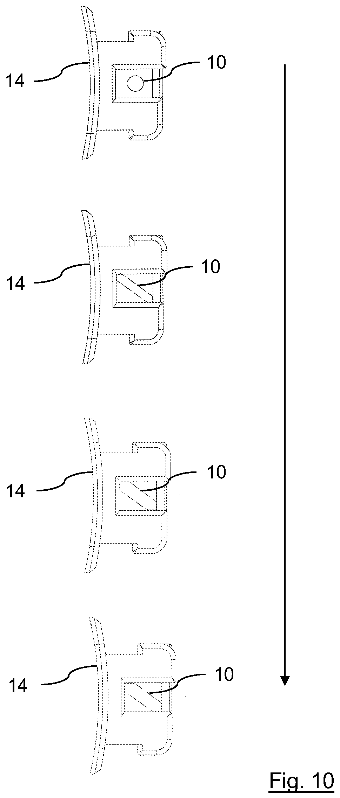

A potential wire sequence for fixed appliance treatment using the new archwires is presented in table 2 below and illustrated in Figure 10, where the new archwires 10 are referred to as E-1, E-2 & E-3. Table 2:

| WIRE DIMENSIONS | WIRE MATERIAL | MECHANICS | APPOINTMENT INTERVAL (approximate) |
|---|---|---|---|
| +/- 0.012" | NiTi | Initial contact point alignment for arches with very displaced teeth | 6-8 weeks |
| E-1 | NiTi | Initial contact point alignment & torque delivery | 6-8 weeks |
| E-2 | NiTi | Progressive contact point alignment & torque delivery | 6-8 weeks |
| E-3 | SS or NiTi | Space closure, arch levelling, overjet correction, overbite correction, arch coordination & centreline correction | Varies |

Figure 10 shows a sequence of archwires 10 that can be used in a self-ligating bracket 14 or molar tube. It is expected, in the majority of cases, the need for an 0.012" NiTi round cross-section archwire 10 (the top archwire 10 shown) will not be needed. Here the orthodontist is provided with three new archwires 10 (E-1, E-2 and E-3) that all have the same non-rectangular cross-section, but with different cross sectional dimensions. Each cross-section of the new archwires 10 has two opposite substantially right-angled edges that are connected together by respective connecting edges. Here the connecting edges are straight edges and the resulting cross-section of each of the new archwires 10 is a non-regular hexagon.

In the preferred embodiment of the archwire 10, the two edges that are at the opposite corners of the cross-section are at 90 degrees angle to each other (a precise right-angle) but some flexibility in this angle is possible, for example up to 5 degrees either way to create a still functioning archwire 10. Preferably, if the angle is precisely 90 degrees, then the cross-section of the archwire 10 is sized to closely match the size of the lumen 12 into which the archwire 10 is to be located. This provides the closest and tightest fit of the archwire 10 in the lumen 12 of the bracket 14 and provides the best way of providing the necessary torque effect on the bracket 14 from the archwire 10.

A number of modifications to the novel archwire 10 may be useful to maximise the flexibility and these are discussed below. Conversely it may be useful to increase the rigidity of the final hexagonal archwire and similarly a number of modifications may be useful, these are also discussed below. For patient comfort the wire edges may need to be slightly bevelled.

As can be seen in Figure 10, the improved archwires 10 are designed so that they can be used in sequence by the orthodontist, however the orthodontist will use clinical judgement as to the wire(s) selected to be used in any given patient. The three archwires 10 (E-1, E-2 and E-3) can be used at various stages of treatment by the orthodontist to carry out the necessary tasks in moving a patient's teeth. The cross-sections of the three archwires 10 are all of the same shape (as described above) but are of different cross sectional dimensions. The three archwires 10 form a set of archwires 10 that are to be used by the orthodontist.

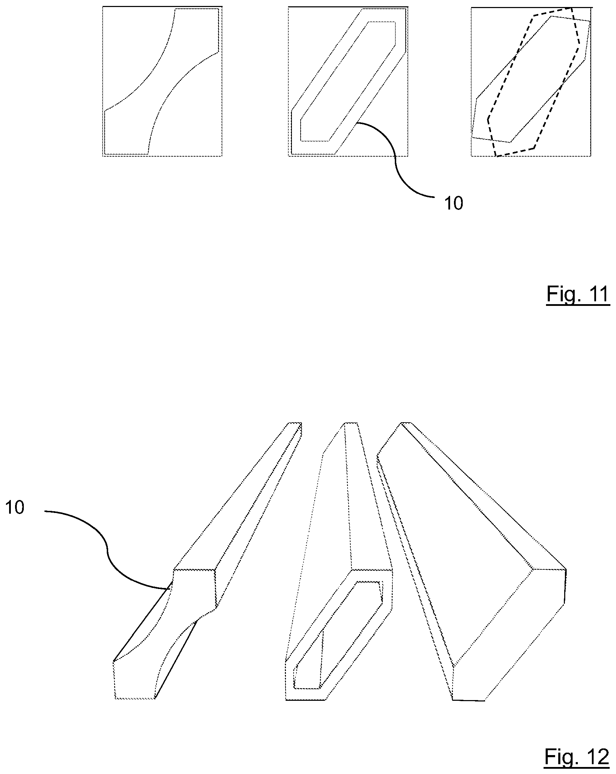

Figures 11 and 12 show different embodiments of archwire 10 modified in order to increase the flexibility of the archwire 10. They are shown in Figure 11 in cross-section and in Figure 12 in perspective. All of the different archwires 10 still have the same structure of the cross-section, with two pairs of edges 18 at right-angle that are joined together by connecting edges 20. The connecting edges 20 can be straight edges, curved edges or comprise a series of two or more sub-edges. The second archwire 10 shown in Figure 11 is hollow. The designs shown in these two Figures are all designed to provide increased flexibility while also maintaining control, when the archwire 10 is located in the lumen 12 of a bracket 14.

The third archwire of Figure 11 illustrates the two positions, represented by solid and dashed lines, when the archwire is actively delivering torque. It can be seen that when actively engaging torque the archwire engages with opposite sides of the lumen 12 in an orthodontic bracket 14 or molar tube. The wire similarly engages opposite sides of the bracket lumen when the wire is delivering a purely rotational or purely tipping force to the tooth. When a combination of forces are being delivered to the tooth, either opposing walls or all four walls are engaged.

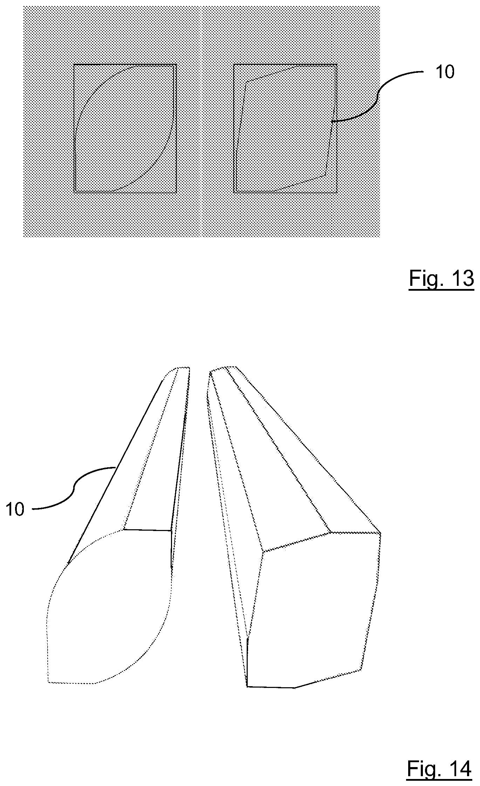

Figures 13 and 14 show yet further embodiments of the archwire 10, which do not form part of the claimed invention, here modified in order to increase the rigidity of the archwire 10. They are shown in Figure 13 in cross-section and in Figure 14 in perspective. As before, all of the different archwires 10 still have the same structure of the cross-section, with two pairs of edges 18 at right-angle that are joined together by connecting edges 20. The archwires 10 shown in these two Figures provide increased rigidity. The second archwire 10 shown in Figure 13 is lemon shaped, but still has the two pairs of edges 18 at right-angles to each other. Similarly the third archwire 10 show in Figure 13 has the two pairs of edges 18 each joined by two sub-edges 20.

In the embodiments of the archwire 10 in Figures 11 and 12 the non-rectangular cross-section 16 is elongate. In the embodiments of the archwire 10 in Figures 13 and 14 the non-rectangular cross-section 16 is not elongate. All of the different embodiments of the archwire 10 have the same features of the cross-section, which is that the cross-section is non-rectangular and comprises two opposite pairs of substantially right-angled edges 18 that are connected together by respective connecting edges 20. The connecting edges 20 can be straight lines, curved lines, or made up of a number of individual sub-edges formed at an angle to each other.

In the preferred embodiment of the archwire 10, the cross-section is symmetrical and the archwire 10 can be fitted into the lumen 12 of a self-ligating bracket 14 or molar tube either way round, as the edges 18 are the same on both sides.

## Claims

1. An archwire (10) adapted to be located in a lumen (12) of a self-ligating orthodontic bracket or molar tube (14), wherein the archwire (10) has a non-rectangular cross-section (16) comprising only two opposite pairs of substantially right-angled edges (18) connected together by respective single connecting edges (20) and the archwire (10) can engage with opposite sides of the lumen (12) in the orthodontic bracket or molar tube (14).

2. An archwire according to claim 1, wherein the connecting edges (20) are straight edges (20).

3. An archwire according to claim 1 or 2, wherein the non-rectangular cross-section (16) comprises a non-regular hexagon.

4. An archwire according to claim 1, wherein the connecting edges (20) are curved edges (20).

5. An archwire according to any preceding claim, wherein the archwire (10) is hollow.

6. An archwire according to any preceding claim, wherein the non-rectangular cross-section (16) is elongate.

7. An archwire according to any one of claims 1 to 5, wherein the non-rectangular cross-section (16) is not elongate.

8. An archwire according to any preceding claim, wherein the cross-section (16) of the archwire (10) is constant along the whole length of the archwire (10).

9. A set of archwires (10), wherein each archwire (10) is according to any preceding claim, wherein the set comprises archwires (10) with different sized cross-sections (16) from each other.

## Patentansprüche

1. Bogendraht (10), der dazu geeignet ist, sich in einem Lumen (12) eines selbstligierenden orthodontischen Brackets oder eines Molarenröhrchens (14) zu befinden, wobei der Bogendraht (10) einen nicht rechteckigen Querschnitt (16) aufweist, der nur zwei gegenüberliegende Paare von im Wesentlichen rechtwinkligen Rändern (18) umfasst, die durch jeweilige einzelne Verbindungsränder (20) miteinander verbunden sind, und der Bogendraht (10) mit gegenüberliegenden Seiten des Lumens (12) in dem orthodontischen Bracket oder dem Molarenröhrchen (14) in Eingriff kommen kann.

2. Bogendraht nach Anspruch 1, wobei die Verbindungsränder (20) gerade Ränder (20) sind.

3. Bogendraht nach Anspruch 1 oder 2, wobei der nicht rechteckige Querschnitt (16) ein unregelmäßiges Sechseck umfasst.

4. Bogendraht nach Anspruch 1, wobei die Verbindungsränder (20) gebogene Ränder (20) sind.

5. Bogendraht nach einem der vorhergehenden Ansprüche, wobei der Bogendraht (10) hohl ist.

6. Bogendraht nach einem der vorhergehenden Ansprüche, wobei der nicht rechteckige Querschnitt (16) länglich ist.

7. Bogendraht nach einem der Ansprüche 1 bis 5, wobei der nicht rechteckige Querschnitt (16) nicht länglich ist.

8. Bogendraht nach einem der vorhergehenden Ansprüche, wobei der Querschnitt (16) des Bogendrahts (10) entlang der gesamten Länge des Bogendrahts (10) konstant ist.

9. Satz von Bogendrähten (10), wobei jeder Bogendraht (10) nach einem der vorhergehenden Ansprüche gestaltet ist, wobei der Satz Bogendrähte (10) mit voneinander unterschiedlich großen Querschnitten (16) umfasst.

## Revendications

1. Fil arqué (10) adapté pour être situé dans un espace libre (12) d'un tube molaire ou d'un bracket orthodontique auto-ligaturant (14), dans lequel le fil arqué (10) présente une section transversale non rectangulaire (16) comprenant uniquement deux paires opposées de bords (18) essentiellement à angle droit reliés ensemble par des bords (20) respectifs à connexion unique, et le fil arqué (10) peut s'engager avec deux côtés opposés de l'espace libre (12) dans le tube molaire ou bracket orthodontique auto-ligaturant (14).

2. Fil arqué selon la revendication 1, dans lequel les bords de connexion (20) sont des bords droits (20).

3. Fil arqué selon la revendication 1 ou 2, dans lequel la section transversale non rectangulaire (16) comprend un hexagone non régulier.

4. Fil arqué selon la revendication 1, dans lequel les bords de connexion (20) sont des bords incurvés (20).

5. Fil arqué selon l'une quelconque revendication précédente, dans lequel le fil arqué (10) est creux.

6. Fil arqué selon l'une quelconque revendication précédente, dans lequel la section transversale non rectangulaire (16) est allongée.

7. Fil arqué selon l'une quelconque revendication des revendications 1 à 5, dans lequel la section transversale non rectangulaire (16) n'est pas allongée.

8. Fil arqué selon l'une quelconque revendication précédente, dans lequel la section transversale (16) du fil arqué (10) est constante sur toute la longueur du fil arqué (10).

9. Jeu de fils arqués (10), dans lequel chaque fil arqué (10) et selon l'une quelconque revendication précédente, dans lequel le jeu comprend des fils arqués (10) de sections transversales (16) de tailles différentes l'une de l'autre.
